(19) Europäisches Patentamt / European Patent Office / Office européen des brevets

(11) **EP 4 451 381 A1**

(12) **EUROPEAN PATENT APPLICATION**

(43) Date of publication:
**23.10.2024 Bulletin 2024/43**

(21) Application number: **24160386.9**

(22) Date of filing: **28.02.2024**

(51) International Patent Classification (IPC):
**H01M 4/36** *(2006.01)*     **H01M 4/04** *(2006.01)*
**H01M 4/133** *(2010.01)*     **H01M 4/134** *(2010.01)*
**H01M 4/1393** *(2010.01)*     **H01M 4/587** *(2010.01)*

(52) Cooperative Patent Classification (CPC):
**H01M 4/0471; H01M 4/133; H01M 4/134;**
**H01M 4/1393; H01M 4/366; H01M 4/587;**
H01M 4/0404; H01M 4/0421; H01M 4/0428;
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.03.2023 KR 20230027729**

(71) Applicant: **SK On Co., Ltd.**
**Seoul 03161 (KR)**

(72) Inventors:
• **LEE, Yong Seok**
**34124 Daejeon (KR)**
• **KIM, Sung Do**
**34124 Daejeon (KR)**

• **KIM, Jeong A**
**34124 Daejeon (KR)**
• **MOON, Joon Hyung**
**34124 Daejeon (KR)**
• **SEO, Seung Deok**
**34124 Daejeon (KR)**
• **YANG, Young Mo**
**34124 Daejeon (KR)**
• **JEONG, Kwang Ho**
**34124 Daejeon (KR)**
• **CHUNG, Ju Ho**
**34124 Daejeon (KR)**

(74) Representative: **Stolmár & Partner
Patentanwälte PartG mbB
Blumenstraße 17
80331 München (DE)**

(54) **ANODE FOR LITHIUM SECONDARY BATTERY AND LITHIUM SECONDARY BATTERY INCLUDING THE SAME**

(57)     An anode for a lithium secondary battery includes an anode current collector, a second anode active material layer disposed on the anode current collector and including a second anode active material that includes a graphite-based active material and composite particles, and a first anode active material layer disposed between the anode current collector and the second anode active material layer and including a first anode active material that includes a graphite-based active material and does not include the composite particles. Each of the composite particles includes a carbon-based particle including pores, a siliconcontaining coating layer disposed on an inside of the pores of the carbon-based particle or on a surface of the carbon-based particle, and a surface oxide layer disposed on the siliconcontaining coating layer and including a silicon oxide.

FIG. 1

**Description**

BACKGROUND

1. Field

The present disclosure relates to an anode for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile.

Examples of the secondary battery includes a lithium secondary battery, a nickelcadmium battery, a nickel-hydrogen battery, etc. The lithium secondary battery is being actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape accommodating the electrode assembly and the electrolyte.

Recently, as an application range of the lithium secondary battery has been expanded, developments of a lithium secondary battery having higher capacity and power is being progressed. For example, an anode including an anode active material in which silicon and carbon are hybridized may be used in the lithium secondary battery.

However, silicon-carbon composite anode active material may degrade battery life-span properties due to a volume expansion and a side reaction with the electrolyte, and may not provide both sufficient life-span and power properties.

SUMMARY

According to an aspect of the present disclosure, there is provided an anode for a lithium secondary battery and a lithium secondary battery including the same having improved power and life-span properties.

An anode for a lithium secondary battery includes an anode current collector, a second anode active material layer disposed on the anode current collector and including a second anode active material that includes a graphite-based active material and composite particles, and a first anode active material layer disposed between the anode current collector and the second anode active material layer and including a first anode active material that includes a graphite-based active material and does not include the composite particles. Each of the composite particles includes a carbon-based particle including pores, a silicon-containing coating layer disposed on an inside of the pores of the carbon-based particle or on a surface of the carbon-based particle, and a surface oxide layer disposed on the silicon-containing coating layer and including a silicon oxide.

In some embodiments, a content of the composite particles may be in a range from 3 wt% to 50 wt% based on a weight of the second anode active material layer.

In some embodiments, the first anode active material may consist of the graphite-based active material.

In some embodiments, a Z-axis pore orientation value measured using a 3D X-ray microscope (XRM) for the first anode active material layer and the second anode active material layer may be 0.4 or more. The Z-axis pore orientation value may be measured using a Porodict program from open pore three-dimensional shape data. The open pore three-dimensional shape data may be obtained by three-dimensionally recombining and modeling a plurality of tomographic images of the first anode active material layer and the second anode active material layer obtained by the 3D XRM.

In some embodiments, a percolation path length measured using a 3D X-ray microscope (XRM) for the first anode active material layer and the second anode active material layer is 75 $\mu$m or less. The percolation path length is an average of shortest paths of top 100 pores in an order of largest pore diameters from open pore 3D shape data from a surface of the second anode active material layer that is not in contact with the first anode active material layer to a surface of the anode current collector. The open pore three-dimensional shape data may be obtained by three-dimensionally recombining and modeling a plurality of tomographic images of the first anode active material layer and the second anode active material layer obtained by the 3D XRM.

In some embodiments, a silicon oxidation number ratio defined by Equation 1 of the composite particles may be 1.7 or more.

[Equation 1]

$$\text{Silicon oxidation number ratio} = O_S/O_B$$

In Equation 1, $O_B$ is an oxidation number of silicon included in the silicon-containing coating layer calculated by substituting a value obtained by subtracting 99.6 eV from a binding energy of silicon included in the silicon-containing coating layer measured through an X-ray photoelectron spectroscopy (XPS) into a silicon oxidation number calibration curve, and $O_S$ is an oxidation number of silicon included in the surface oxide layer calculated by substituting a value obtained by subtracting 99.6 eV from a binding energy of silicon included in the surface oxide layer measured through the XPS into the silicon oxidation number calibration curve.

In some embodiments, the silicon oxidation number calibration curve may be obtained by designating points corresponding to $Si^0$, $Si^{1+}$, $Si^{2+}$, $Si^{3+}$ and $Si^{4+}$ in a graph in which the oxidation number of silicon is set as x-axis and a value obtained by subtracting 99.6 eV from the binding energy of silicon measured through the XPS is set as a y-axis, and connecting adjacent points by the shortest distance.

In some embodiments, the silicon-containing coating layer may be located in a region corresponding to a depth of 100 nm to 700 nm from a surface of the composite particle, and the surface oxide layer may be located in a region corresponding to a depth of 10 nm or less from the surface of the composite particle.

In some embodiments, an oxygen content ratio defined by Equation 2 of the composite particles may be 0.4 or less.

[Equation 2]

$$\text{Oxygen content ratio} = C_B/C_S$$

In Equation 2, $C_B$ is a percentage (at%) of oxygen atoms in the silicon-containing coating layer relative to a sum of the number of atoms in the silicon-containing coating layer and the number of atoms in the surface oxide layer measured by an X-ray photoelectron spectroscopy (XPS), and $C_S$ is a percentage (at%) of oxygen atoms in the surface oxide layer relative to the sum of the number of atoms in the silicon-containing coating layer and the number of atoms in the surface oxide layer measured by the XPS.

In some embodiments, the carbon-based particle may have an amorphous structure.

In some embodiments, silicon included in the silicon-containing coating layer may have an amorphous structure, or a crystallite size of silicon included in the silicon-containing coating layer measured by Equation 3 may be 7 nm or less.

[Equation 3]

$$L = \frac{0.9\lambda}{\beta cos\theta}$$

In Equation 3, L is a crystallite size (nm), $\lambda$ is an X-ray wavelength (nm), $\beta$ is a full width at half maximum (rad) of a peak of a (111) plane of silicon included in the silicon-containing coating layer, and $\theta$ is a diffraction angle (rad).

In a method of preparing an anode for a lithium secondary battery, a first anode active material layer that includes a first anode active material including a graphite-based active material is formed on a surface of an anode current collector. Carbon-based particles containing pores and a silicon source are fired together to form a silicon-containing coating layer on an inside or on a surface of the pores of the carbon-based particles. The carbon-based particles on which the silicon-containing coating layer is formed are heat-treated in an oxygen atmosphere to form composite particles including a surface oxide layer that contains a silicon oxide and is formed on the silicon-containing coating layer. A second anode active material layer is formed on the first anode active material layer. The second anode active material layer includes a second anode active material that includes a graphite-based active material and the composite particles.

In some embodiments, the first anode active material may not include the composite particles.

In some embodiments, the heat-treating for the formation of the surface oxide layer may be performed at a temperature of 100°C to 300°C.

An anode for a lithium secondary battery is prepared by the method of preparing an anode for a lithium secondary battery.

A lithium secondary battery includes the anode for a lithium secondary battery according to the above-described embodiments, and a cathode facing the anode.

The anode for a lithium secondary battery according to embodiments of the present disclosure may include an anode current collector, a first anode active material layer including a first anode active material that includes a graphite-based active material and may not include a composite particle, and a second anode active material layer including a second anode active material that includes a graphite-based active material and silicon-carbon composite particles. The first anode active material layer and the second anode active material layer may be sequentially stacked from the anode current collector.

The first anode active material layer in a direct contact with the anode current collector may not include the composite particles, so that stability of the anode may be enhanced. Additionally, the second anode active material layer may include the silicon-carbon composite particles to provide an increased anode capacity

The anode may be employed, so that a lithium secondary battery of high capacity, high stability and power may be implemented. As the power properties of the lithium secondary battery are improved, a rapid charging performance may also be improved.

In example embodiments of the present disclosure, the composite particle may include a carbon-based particle including pores, a silicon-containing coating layer, and a surface oxide layer including silicon oxide. For example, the carbon-based particle may be a porous particle including a plurality of pores. In this case, the silicon-containing coating layer may be formed on at least one of an inside of the pores and a surface.

Accordingly, cracks due to a difference of volume expansion ratios between carbon and silicon during charging and discharging of the secondary battery may be prevented, and the life-span properties of the lithium secondary battery may be improved using the anode.

In example embodiments, the surface oxide layer including silicon oxide may be formed on the silicon-containing coating layer. An oxidation number of silicon included in the surface oxide layer may be greater than an oxidation number of silicon included in the silicon-containing coating layer. Accordingly, generation of gas caused when silicon elements included in the silicon-containing coating layer react with moisture in an atmosphere or a solvent (e.g., water) of a slurry may be prevented. Additionally, deformation of the silicon elements of the silicon-containing coating layer into silicon oxide may be prevented, excessive deterioration of the capacity properties of the anode active material may be prevented.

BRIEF DESCRIPTION OF THE DRAWINGS

FIG. 1 is a schematic cross-sectional views illustrating an anode for a lithium secondary battery in accordance with example embodiments.
FIG. 2 is a schematic graph showing a silicon oxidation number calibration curve.
FIGS. 3 and 4 are a schematic plan view and a schematic cross-sectional view, respectively, illustrating a lithium secondary battery in accordance with example embodiments.

DETAILED DESCRIPTION OF THE EMBODIMENTS

According to embodiments of the present disclosure, an anode for a lithium secondary battery including an anode current collector, a first anode active material layer and a second anode active material layer. According to embodiments of the present disclosure, a lithium secondary battery including the anode for a lithium secondary battery is also provided.

Hereinafter, embodiments of the present disclosure will be described in detail. However, those skilled in the art will appreciate that such embodiments are provided to further understand the spirit of the present inventive concepts do not limit the subject matters to be protected as disclosed in the detailed description and appended claims.

An anode for a lithium secondary battery according to example embodiments may include an anode current collector, a first anode active material layer, and a second anode active material layer. In some examples, the anode may include the anode current collector, the second anode active material layer disposed on the anode current collector, and the first anode active material layer disposed between the anode current collector and the second anode active material layer.

In some embodiments, the first anode active material layer and the second anode active material layer may be sequentially stacked on at least one surface of the anode current collector. For example, the first anode active material layer and the second anode active material layer may be sequentially stacked on one or both surfaces of the anode current collector.

In some embodiments, the first anode active material layer may be in direct contact with the anode current collector, and the second anode active material layer may be in direct contact with the first anode active material layer.

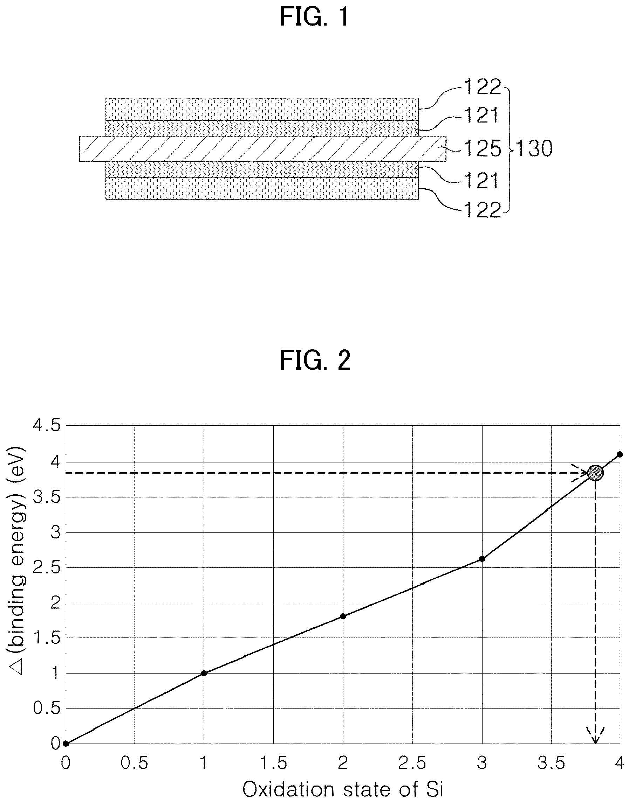

FIG. 1 is a schematic cross-sectional views illustrating an anode for a lithium secondary battery in accordance with example embodiments.

Referring to FIG. 1, an anode 130 for a lithium secondary battery may include a first anode active material layer 121 and a second anode active material layer 122 sequentially stacked on both surfaces of an anode current collector 125.

In example embodiments, the first anode active material layer 121 may include a first anode active material. The first anode active material may include a graphite-based active material. The first anode active material layer 121 adjacent to the anode current collector includes the graphite-based active material having high stability, so that volume expansion and contraction may become small during charging and discharging of the battery and life-span properties of the anode may be improved.

In some examples, the first anode active material above may not include composite particles. The composite particles may enhance a capacity of the battery, but stability of the anode may be slightly deteriorated when included in the first anode active material layer 121 due to a large volume change during charging and discharging.

As used herein, the term "composite particle" may refer to a composite in which silicon and carbon are included together in one particle.

In some embodiments, the first anode active material above may substantially consist of a graphite-based active material. The first anode active material above may not include other types of active materials other than the graphite-based active material, e.g., a silicon-based active material, and other carbon-based active materials. The first anode active material may consist of the graphite-based active material, the life-span properties of the anode may be further improved.

In example embodiments, the graphite-based active material may include artificial graphite or natural graphite. Preferably, the graphite-based active material may include artificial graphite.

In example embodiments, a thickness of the first anode active material layer 121 may not be particularly limited, but may be, e.g., in a range from 10 $\mu$m to 100 $\mu$m.

In example embodiments, the second anode active material layer 122 may include a second anode active material. The second anode active material may include a graphite-based active material and the composite particles. The second anode active material may include both the graphite-based active material and silicon-carbon composite particles, thereby increasing the capacity of the anode. Additionally, the second anode active material layer 122 located relatively far from the anode current collector may contain the composite particles having a large volume change ratio, thereby enhancing the stability of the lithium secondary battery.

In example embodiments, the graphite-based active material of the second anode active material may be the same as or different from the graphite-based active material of the first anode active material. For example, the graphite-based active material of the first anode active material and the graphite-based active material of the second anode active material may equally include artificial graphite. Alternatively, e.g., the graphite-based active material of the first anode active material may include artificial graphite, and the graphite-based active material of the second anode active material may include a mixture of artificial graphite and natural graphite.

In example embodiments, a content of the composite particles may be in a range from 3 weight percent (wt%) to 50 wt% based on a total weight of the second anode active material layer 122. In some embodiments, the content of the composite particles may be in a range from 10 wt% to 30 wt%, or preferably from 15 wt% to 25 wt% based on the total weight of the second anode active material layer 122.

When the composite particles are included within the above range, the second anode active material layer 122 may provide a high-capacity anode and appropriate structural stability may be maintained to improve life-span properties.

In example embodiments, the composite particle may include a carbon-based particle including pores, a silicon-containing coating layer disposed at an inside of the pores of the carbon-based particle or on a surface of the carbon-based particle, and a surface oxide layer being disposed on the silicon-containing coating layer and including a silicon oxide.

The anode active material may include both silicon and the carbon-based particle. In this case, carbon may partially alleviate a volume expansion of silicon. However, during charging and discharging of the secondary battery, a difference between volume expansion ratios of silicon (e.g., about 400% or more) and carbon (e.g., about 150% or less) may be increased, resulting in cracks in the anode active material. Accordingly, during repeated charging and discharging, the anode active material may be exposed to an electrolyte solution to cause side reactions such as gas generation, and the life-span properties of the secondary battery may be deteriorated.

According to example embodiments of the present disclosure, the carbon-based particle may include pores. For example, the carbon-based particle may be a porous particle including a plurality of pores.

In some embodiments, the silicon-containing coating layer may be formed on at least one of the inside of the pores and the surface of the carbon-based particle. Accordingly, cracks due to the difference in volume expansion ratios of carbon and silicon may be prevented during charging and discharging of the secondary battery.

In example embodiments, a pore size of the carbon-based particle may be 20 nm or less, preferably less than 10 nm. In the above range, an excessive deposition of silicon in the pores may be prevented. Accordingly, defects due to the difference of volume expansion ratios of carbon and silicon during charging and discharging of the secondary battery may be further reduced.

In some embodiments, the pore size of the carbon-based particle may be in a range from 0.1 nm to 20 nm, or from 0.1 nm to 10 nm.

For example, the carbon-based particle may include an activated carbon, a carbon nanotube, a carbon nanowire, graphene, a carbon fiber, carbon black, graphite, a porous carbon, a pyrolyzed cryogel, a pyrolyzed xerogel, a pyrolyzed aerogel, etc. These may be used alone or in a combination of two or more therefrom.

In some embodiments, the carbon-based particle may include an amorphous structure or a crystalline structure. Preferably, the carbon-based particle may include the amorphous structure. In this case, durability of the anode active material may be increased, and thus cracks may be suppressed during charging and discharging of the battery or when an external impact is applied. Thus, the life-span properties of the secondary battery may be enhanced.

As described above, the anode active material above may include the silicon-containing coating layer formed at an inside of the pores of the carbon-based particle and/or on the surface of the carbon-based particle. The inside of the pores may refer to a pore wall forming pores included in the carbon-based particles. The surface of the carbon-based particle may refer to an outer surface exposed to an outside of the carbon-based particle.

In example embodiments, the difference of volume expansion ratios between carbon and silicon may be alleviated while employing the high-capacity properties of silicon included in the silicon-containing coating layer. Accordingly, microcracks and exposure to the electrolyte solution during repeated charging and discharging of the secondary battery may be avoided or reduced. Additionally, the life-span properties may be improved while maintaining the power properties of the secondary battery.

For example, silicon elements or silicon particles may be formed on at least a portion of the pores and/or on the surface of the carbon-based particle to form the silicon-containing coating layer.

In example embodiments, the surface oxide layer including the silicon oxide may be formed on the silicon-containing coating layer. In one embodiment, silicon particles located on a surface portion of the silicon-containing coating layer may be oxidized to form the surface oxide layer.

In example embodiments, the silicon oxide may include $SiO_x$ ($0<x<2$).

For example, the silicon-containing coating layer may be formed directly on the inside and/or on the surface of the pores of the carbon-based particle. For example, the silicon-containing coating layer may be disposed under the surface oxide layer.

In one embodiment, the silicon-containing coating layer may be located within a region corresponding to a depth from 100 nm to 700 nm from a surface of the composite particle. The silicon-containing coating layer may include an inside of the composite particle having a distance from the surface of the composite particle in a range from 100 nm to 700 nm, but the location of the silicon-containing coating layer is not limited to the above range.

In one embodiment, the surface oxide layer may be located in a region having a depth of 10 nm or less from the surface of the composite particle. The surface oxide layer may include an inside of the composite particle having a distance of 10 nm or less from the surface of the composite particle, but the location of the surface oxide layer is not limited to the above range.

For example, the surface oxide layer may refer to an outermost portion of the composite particle in which a distance from the surface is 10 nm or less.

For example, side reactions of silicon elements and water may be suppressed by the surface oxide layer, thereby improving the life-span properties of the secondary battery. However, if an excessively large amount of silicon is transformed into the silicon oxide, the capacity properties of the anode active material may be degraded.

In example embodiments, an oxidation number of silicon included in the surface oxide layer may be greater than an oxidation number of silicon included in the silicon-containing coating layer. For example, the surface oxide layer may serve as a protective layer of the silicon-containing coating layer. Accordingly, generation of gas caused when silicon elements included in the silicon-containing coating layer react with moisture or a solvent (e.g., water) of a slurry in an atmosphere may be prevented. Additionally, the silicon elements included in the silicon-containing coating layer may be prevented from being transformed into the silicon oxide, so that excessive degradation of the capacity properties of the anode active material can be prevented.

The term "oxidation number " herein may refer to the number of charges of a specific atom constituting a material when assuming that an exchange of electrons completely occurred in the material (a molecule, an ionic compound, a single element material, etc.). For example, the oxidation number may represent an oxidation state.

For example, the oxidation number of $Si^0$ is 0, the oxidation number of $Si^{1+}$ is +1, the oxidation number of $Si^{2+}$ is +2, the oxidation number of $Si^{3+}$ is +3, and the oxidation number of $Si^{4+}$ is +4. The denotation "+" before the oxidation number may be omitted. For example, the oxidation number of $Si^{1+}$ may be represented by 1.

In example embodiments, a silicon oxidation number ratio of the composite particle defined by Equation 1 may be 1.7 or more, and preferably, may be in a range from 2 to 4.

## [Equation 1]

$$\text{Silicon oxidation number ratio} = O_S/O_B$$

In Equation 1, $O_B$ may be an oxidation number of silicon included in the silicon-containing coating layer calculated by substituting a value obtained by subtracting 99.6 eV from a binding energy of silicon included in the silicon-containing coating layer measured through an X-ray photoelectron spectroscopy (XPS) into a silicon oxidation number calibration curve, and $O_S$ may be an oxidation number of silicon included in the surface oxide layer calculated by substituting a value obtained by subtracting 99.6 eV from a binding energy of silicon included in the surface oxide layer measured through the XPS into the silicon oxidation number calibration curve.

FIG. 2 is a schematic graph showing a silicon oxidation number calibration curve.

Referring to FIG. 2, the silicon oxidation number calibration curve may be obtained as follows.

A graph having the oxidation number of silicon as an X-axis and a value obtained by subtracting 99.6 eV from the binding energy of silicon measured through the XPS (e.g., $\Delta$(binding energy)) as a Y-axis may be set.

In the graph, points corresponding to $Si^0$, $Si^{1+}$, $Si^{2+}$, $Si^{3+}$ and $Si^{4+}$ may each be indicated on the graph, and then adjacent points may be connected to each other by the shortest distance to obtain the silicon oxidation number calibration curve.

For example, the binding energies measured through the XPS of $Si^0$, $Si^{1+}$, $Si^{2+}$, $Si^{3+}$ and $Si^{4+}$ may be 99.6 eV, 100.6 eV, 101.4 eV, 102.2 eV and 103.7 eV, respectively. Thus, the points corresponding to $Si^0$, $Si^{1+}$, $Si^{2+}$ $Si^{3+}$ and $Si^{4+}$ may have (x,y) coordinates of (0,0), (1,1), (2,1.8), (3,2.6), and (4,4.1), respectively.

In Equation 1, $O_B$ may be calculated by substituting a value obtained by subtracting 99.6 eV that is the binding energy of $Si^0$ from the binding energy of silicon included in the silicon-containing coating layer measured through the XPS into the silicon oxidation number calibration curve.

In Equation 1, $O_S$ may be calculated by substituting a value obtained by subtracting 99.6 eV from the binding energy of silicon included in the surface oxide layer measured through the XPS into the silicon oxidation number calibration curve.

For example, the binding energies of silicon included in the silicon-containing coating layer and silicon included in the surface oxide layer may each be measured by the XPS. The y-values of the above-described silicon oxidation calibration curve may be obtained by subtracting 99.6 eV from each of the measured binding energies. As indicated by a dotted line in FIG. 2, the oxidation numbers of silicon (for example, $O_B$ and $O_S$) may be achieved by obtaining corresponding x values from the y values.

In one embodiment, the binding energy of silicon included in the silicon-containing coating layer may be obtained by etching from the surface of the composite particle to a depth of 100 nm or more using an argon (Ar) ion gun.

The dotted line in FIG. 2 is illustrated as an example to explain the process of obtaining the oxidation number of silicon.

Within the above range of the silicon oxidation number ratio, an excessive deformation of the silicon-containing coating layer into the silicon oxide may be prevented while sufficiently including the silicon oxide in the surface oxide layer. Accordingly, the side reactions between silicon and water can be suppressed, thereby improving the life-span properties and maintaining the capacity properties.

In some embodiments, $O_B$ may be in a range from 1.2 to 2.0, and $O_S$ may be in a range from 3.0 to 4.0. In the above range, side reactions occurring in the surface oxide layer may be suppressed while suppressing the excessive oxidation of silicon included in the silicon-containing coating layer.

In some embodiments, an oxygen content of the surface oxide layer measured through the XPS may be greater than that of the silicon-containing coating layer. Accordingly, gas generation due to a contact between silicon and water that may be a slurry solvent, or between silicon and a moisture in the atmosphere may be suppressed by the surface oxide layer.

In some embodiments, an oxygen content ratio defined by Equation 2 may be 0.4 or less, and preferably, may be in a range from 0.01 to 0.35.

## [Equation 2]

$$\text{Oxygen content ratio} = C_B/C_S$$

In Equation 2, $C_B$ is a percentage (at%) of oxygen atoms in the silicon-containing coating layer relative to a sum of the number of atoms in the silicon-containing coating layer and the number of atoms in the surface oxide layer measured by the XPS. $C_S$ is a percentage (at%) of oxygen atoms in the surface oxide layer relative to the sum of the number of atoms in the silicon-containing coating layer and the number of atoms in the surface oxide layer measured by the XPS.

For example, the number of atoms in the silicon-containing coating layer and the number of atoms in the surface oxide layer may be the number of all atoms in the silicon-containing coating layer and the number of all atoms in the surface oxide layer.

Within the above oxygen content ratio range, the above-mentioned side reactions of silicon contained in the composite particles may be sufficiently suppressed while suppressing the oxidation of silicon contained in the silicon-containing coating layer. Accordingly, the side reactions with silicon and water may be prevented, so that the life-span properties may be improved and the capacity properties may be maintained.

In some embodiments, $C_B$ may be in a range from 8 at% to 15 at%, and $C_S$ may be in a range from 15 at% to 34 at%. In the above range, the surface oxide layer may be sufficiently formed while suppressing the oxidation of silicon in the silicon-containing coating layer.

In example embodiments, the silicon-containing coating layer described above may have an amorphous structure or may contain silicon having a crystallite size of 7 nm or less measured by an X-ray diffraction (XRD) analysis. In preferable examples, the crystallite size may be 4 nm or less. In the above range, mechanical stability of the anode active material may be improved during a press process for manufacturing the secondary battery or during repeated charging and discharging. Accordingly, a capacity retention may be increase, thereby improving the life-span properties of the secondary battery.

The term "amorphous structure" as used herein refers to a case that a shape of a single silicon included in the silicon-containing coating layer is amorphous or a case that a crystallite size is excessively small and may not be measured through a Scherrer equation represented by Equation 3 using the X-ray diffraction (XRD) analysis.

[Equation 3]

$$L = \frac{0.9\lambda}{\beta cos\theta}$$

In Equation 3 above, L represents the crystal grain size (nm), $\lambda$ represents an X-ray wavelength (nm), $\beta$ represents a full width at half maximum (FWHM) (rad) of a peak, and $\theta$ represents a diffraction angle (rad). In example embodiments, the FWHM in the XRD analysis for measuring the crystallite size may be measured from a peak of (111) plane of silicon contained in the silicon-containing coating layer.

In some embodiments, in Equation 3 above, $\beta$ may represent a FWHM obtained by correcting a value derived from an equipment. In an embodiment, Si may be used as a standard material for reflecting the equipment-derived value. In this case, the device-derived FWHM may be expressed as a function of $2\theta$ by fitting a FWHM profile in an entire $2\theta$ range of Si. Thereafter, a value obtained by subtracting and correcting the equipment-derived FWHM value at the corresponding $2\theta$ from the function may be used as $\beta$.

In some embodiments, the silicon-containing coating may further contain at least one of $SiO_x$ (0<x<2) and a silicon carbide (SiC).

In some embodiments, the silicon carbide may not be present in the pores of the carbon-based particle or on the surface of the carbon-based particle. For example, the silicon-containing coating layer may not include the silicon carbide. For example, the silicon-containing coating layer may include only silicon and/or the silicon oxide. Accordingly, the capacity properties of the secondary battery may be improved.

For example, the formation of silicon carbide may be suppressed by controlling a temperature and a time of a silicon deposition.

In some embodiments, silicon may include the amorphous structure. In this case, the crystallite grain size of silicon and a peak intensity ratio of a Raman spectrum as described later may be maintained within an appropriate range. Accordingly, improved life-span properties may be obtained while maintaining the capacity properties.

In some embodiments, the peak intensity ratio of the Raman spectrum of silicon included in the silicon-containing coating layer defined by Equation 4 may be 1.2 or less, and preferably, may be 1.0 or less.

[Equation 4]

Peak intensity ratio of Raman spectrum = I(515)/I(480)

In Equation 4, I(515) may be a peak intensity of silicon included in the silicon-containing coating layer in a region corresponding to a wavenumber of 515 cm$^{-1}$ in the Raman spectrum, and I(480) may be a peak intensity of silicon included in the silicon-containing coating layer in a region corresponding to a wavenumber of 480 cm$^{-1}$ in the Raman spectrum.

For example, I(515) in Equation 4 may represent a ratio of silicon having a crystalline structure included in the silicon-containing coating layer, and I(480) in Equation 4 may represent a ratio of silicon having the amorphous structure included in the silicon-containing coating layer.

For example, in the above-described peak intensity ratio range, the amorphous structure ratio of silicon included in the silicon-containing coating layer may be increased, and structural stability of the anode active material may be improved. Thus, improved life-span properties of the secondary battery may be achieved.

In some embodiments, the range of the crystallite size of silicon included in the silicon-containing coating layer and the range of the peak intensity ratio of the Raman spectrum as described above may both be satisfied. In this case, the amorphous properties of the silicon-containing coating layer may be further enhanced, and stability of the anode active material may be improved. Thus, the life-span properties of the anode active material may be further enhanced.

In some embodiments, a carbon coating layer may be further formed on the outermost portion of the composite particle. Accordingly, the contact of silicon of the anode active material and the moisture in the atmosphere or the contact between silicon and water in the anode slurry may be prevented. Accordingly, reduction of a discharge capacity and a capacity efficiency of the secondary battery may be prevented during a period from preparation of the anode active material to the formation of the anode.

For example, the carbon coating layer may refer to a layer in which carbon particles are formed on at least a portion of the silicon-containing coating layer and/or the surface oxide layer.

In some embodiments, the carbon coating layer may include at least one of carbon and a conductive polymer. Accordingly, the above-described effect of preventing the contact between water and silicon may be implemented while facilitating the formation of the carbon coating layer. Thus, the reduction of the discharge capacity and the capacity efficiency of the secondary battery may be avoided.

For example, the conductive polymer may include polyacetylene, polyaniline, polypyrrole and/or polythiophene.

In some embodiments, the carbon coating layer may also be formed on a portion of the inside and the surface of the pores of the carbon-based particle on which the silicon-containing coating layer or the surface oxide layer is not formed. For example, the carbon coating layer may entirely cover silicon, the silicon oxide and the carbon-based particle on the composite particles on which the silicon-containing coating layer and the surface oxide layer are formed. Accordingly, mechanical stability and chemical stability of the anode active material while blocking the contact with silicon and water.

In example embodiments, a thickness of the second anode active material layer is not particularly limited, but may be, e.g., in a range from 10 μm to 100 μm.

In example embodiments, a ratio of the thickness of the second anode active material layer relative to a thickness of the first anode active material layer may be in a range from 0.5 to 3. In some embodiments, a ratio of the thickness of the second anode active material layer relative to the thickness of the first anode active material layer may be greater than 1.0 and less than or equal to 3.

In the above range of the thickness ratio, the anode capacity may be achieved and the anode active material layer contacting the current collector may have high stability, thereby implementing the lithium secondary battery having improved power properties.

In example embodiments, a Z-axis pore orientation value of the first anode active material layer and the second anode active material layer measured by a 3D X-ray microscope (XRM) may be 0.4 or more.

In some embodiments, the Z-axis pore orientation may be measured using a Porodict program from open pore three-dimensional shape data obtained by 3D- recombining and modeling a plurality of tomographic (single-layered) images of the first anode active material layer and the second anode active material layer obtained by the 3D X-ray microscopy (XRM).

In the X-ray microscope, shapes of internal pores through the first anode active material layer and the second anode active material layer may be photographed. Accordingly, tomographic images may be obtained and a plurality of the tomographic images may be 3-dimensinally recombined to model the three-dimensional shape data of the open pores of the anode from which the internal pore shape can be confirmed.

Through the 3D XRM, an orientation shape of the pores may be confirmed. The pores in the anode active material layer may be a transfer path of ions. As the pores are arranged in a thickness direction of the anode, insertion and de-intercalation of the ions during charging and discharging of the battery may become easier. Thus, a high-power lithium secondary battery may be implemented.

From the above results, a pore orientation value in the thickness direction of the electrode, e.g., in a Z-axis direction may be derived throughout of the first anode active material layer and the second anode active material layer.

For example, an orientation value of the pores of the first and second anode active materials layers in the electrode thickness direction, that is, in a direction perpendicular to the electrode current collector may be referred to as 1. An orientation value of the pores arranged in a direction parallel to the electrode current collector may be referred to as 0. Accordingly, orientation values of all pores are derived in the open pore modeling, and an arithmetic average value thereof may be referred to as a Z-axis pore orientation value of the anode active material layer.

A maximum of the Z-axis pore orientation value may be 1. As the Z-axis pore orientation value becomes closer to 1, more of the pores may be arranged in the thickness direction of the anode.

The Z-axis pore orientation value may be measured by a computer program from open-pore three-dimensional shape data. The computer program is a Porodict program that may be a bulk internal pore shape analysis program of a sample. The Porodict program may be a software from Math2Market.

In example embodiments, the Z-axis pore orientation value measured by the 3D X-ray microscope (XRM) with respect to the first and second anode active material layers may be 0.4 or more, thereby promoting movement of lithium ions and improving power properties of the lithium secondary battery.

In example embodiments, a length of a percolation path measured by the 3D X-ray microscope (XRM) may be 75 $\mu$m or less in the first and second anode active material layers.

Details of the 3D XRM are as described above, and the percolation path length may also be derived from the 3D XRM modeling. For example, a plurality of the tomographic images of the first and second anode active materials layers obtained by the 3D X-ray microscopy (XRM) may be 3D-recombined to model open-pores 3D shape data.

From the open pore 3D shape data, an average value of the shortest paths for reaching from a surface of the second anode active material layer to a surface of the anode current collector of top 100 pores in an order of the largest pore diameters may be defined as the percolation path.

Through the 3D shape data of the open pores above, the length of the shortest path of the pores reaching the surface of the anode current collector from the surface of the second anode active material layer that is not in contact with the first anode active material layer through the first anode active material layer may be measured. The pores may be the top 100 pores in the order of the largest pore diameters. The lengths of the shortest paths may be measured for the pores above, and an arithmetic average value thereof may be defined as the percolation path.

As the percolation path becomes shorter, an ion transfer movement distance may be reduced. Therefore, as the percolation path becomes shorter, insertion and desorption of ions may rapidly occur, and thus a high-power lithium secondary battery may be implemented.

In example embodiments, the length of the percolation path measured by the 3D XRM with respect to the first and second anode active material layers may be reduced to 75 $\mu$m or less, so that the transfer of the lithium ions may be facilitated and the power properties of the lithium secondary battery may be improved.

In example embodiments, the percolation path may be 100% to 107% of the sum of the thicknesses of the first anode active material layer and the second anode active material layer. Accordingly, the lithium ions may be transferred to the anode current collector by the shortened path, so that the power properties of the lithium secondary battery may be further improved.

In example embodiments, the anode current collector may include a metal that has a high conductivity and improved adhesion to the anode slurry, and may have substantially no reactivity within a voltage range of the secondary battery. For example, the anode current collector may include copper, stainless steel, nickel, titanium or an alloy thereof. The anode current collector may include copper or stainless steel surface-treated with carbon, nickel, titanium or silver.

Hereinafter, a method of preparing the above-described anode for a lithium secondary battery according to example embodiments is described in more detail.

In example embodiments, a first anode slurry containing a first anode active material may be prepared. The first anode slurry may be prepared by mixing and stirring the first anode active material together with an anode binder, a conductive material and a thickener in a solvent.

In some embodiments, the first anode active material may include a graphite-based active material and may not include composite particles. Details of the first anode active material may be the same as those described above.

For example, the solvent contained in the anode slurry may be an aqueous solvent such as water, an aqueous hydrochloric acid solution, an aqueous sodium hydroxide solution.

For example, the anode binder may include a polymer material such as styrene-butadiene rubber (SBR). The thickener may include, e.g., carboxymethyl cellulose (CMC).

For example, the conductive material may be included to promote an electron transfer between active material particles. For example, the conductive material may include a carbon-based conductive material such as graphite, carbon black, graphene, a carbon nanotube, etc., and/or a metal-based conductive material such as tin, tin oxide, titanium oxide, a perovskite materials containing, e.g., $LaSrCoO_3$, $LaSrMnO_3$, etc.

In example embodiments, a first anode active material layer may be formed on the anode current collector. In some embodiments, the first anode slurry containing the first anode active material may be applied (coated) on a surface of the anode current collector, and then dried and pressed to form the first anode active material layer..

Details of the first anode active material layer and anode current collector may be the same as those described above.

In example embodiments, carbon-based particles containing pores may be prepared.

In some embodiments, a resol oligomer may be prepared by mixing an aromatic compound containing a hydroxyl group and an aldehyde-based compound. For example, the aromatic compound containing the hydroxyl group may include phenol, and the aldehyde-based compound may include formaldehyde. The resol oligomer may be cured by adding a curing agent, and then classified, washed, and fired to obtain the carbon-based particles containing pores.

In some embodiments, an aromatic compound and a vinyl-based compound may be mixed and polymerized. Thereafter, the carbon-based particles containing the pores may be obtained by washing with water and firing. For example, the aromatic compound may include polystyrene, and the vinyl-based compound may include divinylbenzene.

In some embodiments, an activation process may be performed. In this case, an activity of a pore structure of the carbon-based particles may be easily controlled.

In one embodiment, the activation process may include a physical activation method. For example, a gas having a reactivity with carbon (a steam, a carbon dioxide gas, or a mixed gas of the steam, the carbon dioxide gas and an inert gas) may be introduced and heat-treated at a temperature of 700°C to 1000°C.

In one embodiment, the activation process may include a chemical activation method. For example, acidic and basic agents such as $KOH$, $Na_2CO_3$, $NaOH$, $H_3PO_4$, etc. may be used as an activator. The chemical activation method may be performed at a lower temperature than that of the physical activation method.

Size of the pores contained in the carbon-based particle obtained by the above-described method may be 20 nm or less.

In example embodiments, a silicon source may be injected into a reactor in which the carbon-based particles are loaded, and then fired to form a silicon-containing coating layer on an inside and/or a surface of the pores of the carbon-based particles.

For example, the silicon source may include a silicon-containing gas. In one, the silicon-containing gas may include a silane gas.

In some embodiments, the firing may be performed at a temperature less than 600°C, preferably, in a range from 100 °C to 300 °C. In the above temperature range, silicon having an amorphous structure may be sufficiently included in the silicon-containing coating layer. Accordingly, mechanical stability of the anode active material may be improved during a press process or repeated charging and discharging of the secondary battery.

In example embodiments, the carbon-based particles on which the silicon-containing coating layer is formed may be heat-treated on in an oxygen atmosphere to form a surface oxide layer. In some embodiments, the surface oxide layer may be formed by the heat treatment while injecting an oxygen gas into the carbon-based particles on which the silicon-containing coating layer is formed.

For example, the surface oxide layer including a silicon oxide may be formed by oxidizing silicon particles included in a surface portion of the silicon-containing coating layer.

In the silicon-containing coating layer and the surface oxide layer, a silicon oxidation ratio defined by Equation 1 as described above may be 1.7 or more.

In one embodiment, silicon may be deposited on the inside of the pores of the carbon-based particle and/or on the surface of the carbon-based particle, and then silicon may be oxidized through the oxygen gas injection and the heat treatment to form the surface oxide layer. Accordingly, a surface portion of the composite particle may be sufficiently protected by the silicon oxide, and the silicon-containing coating layer may maintain high-capacity properties of silicon.

In some embodiments, the heat treatment for forming the surface oxide layer may be performed at a temperature in a range from 50°C to 350°C. In some embodiments, the heat treatment for forming the surface oxide layer may be performed at a temperature in a range from 100°C to 300°C. Preferably, the heat treatment for forming the surface oxide layer may be performed at a temperature in a range from 100°C to 250°C. In the above range, side reactions of silicon may be suppressed while preventing an excessive oxidation of silicon.

In some embodiments, a carbon coating layer may be further formed on the surface oxide layer by injecting a carbon source into the reactor. For example, the composite particle may include the carbon coating layer formed at an outermost portion thereof.

For example, the carbon source may include pitch, glucose, sucrose, a phenol-based hydrocarbon and/or a resorcinol-based hydrocarbon. In this case, the firing may be performed after the carbon source is added.

In some embodiments, the carbon source may include a methane gas, an ethylene gas, a propylene gas, an acetylene gas, etc. These may be used alone or in a combination of two or more therefrom. In this case, the carbon coating layer may be formed by a chemical vapor deposition (CVD). For example, the chemical vapor deposition may be performed while introducing the carbon source and performing the firing.

In some embodiments, the carbon source may be a conductive polymer including at least one of polyacetylene, polyaniline, polypyrrole and polythiophene. In this case, the carbon coating layer may be formed by a chemical vapor deposition, an electro-polymerization or a solution process.

In an embodiment, the conductive polymer may be coated, and then fired to modify the conductive polymer into carbon.

In some embodiments, the firing for forming the carbon coating layer may be performed at a temperature less than 600°C. In the above temperature range, a proportion having the amorphous structure of carbon included in the carbon coating layer and silicon included in the silicon-containing coating layer may be sufficiently increased. Accordingly, mechanical stability of the anode active material may be improved during the press process or repeated charging and discharging of the secondary battery.

In example embodiments, a second anode slurry including a second anode active material may be prepared. The second anode slurry above may be prepared by mixing and stirring the second anode active material in a solvent together with an anode binder, a conductive material and a thickener.

In some embodiments, the second anode active material may include a graphite-based active material and the composite particles.

Details of the second anode active material, the anode binder, the conductive material, the thickener and the solvent may be the same as those described above with respect to the first anode slurry.

In example embodiments, the second anode active material layer may be formed on the first anode active material layer. In some embodiments, the second anode slurry including the second anode active material may be coated (coated) on the first anode active material layer, and then dried and pressed to form the second anode active material layer.

Details of the second anode active material layer may be the same as those described above.

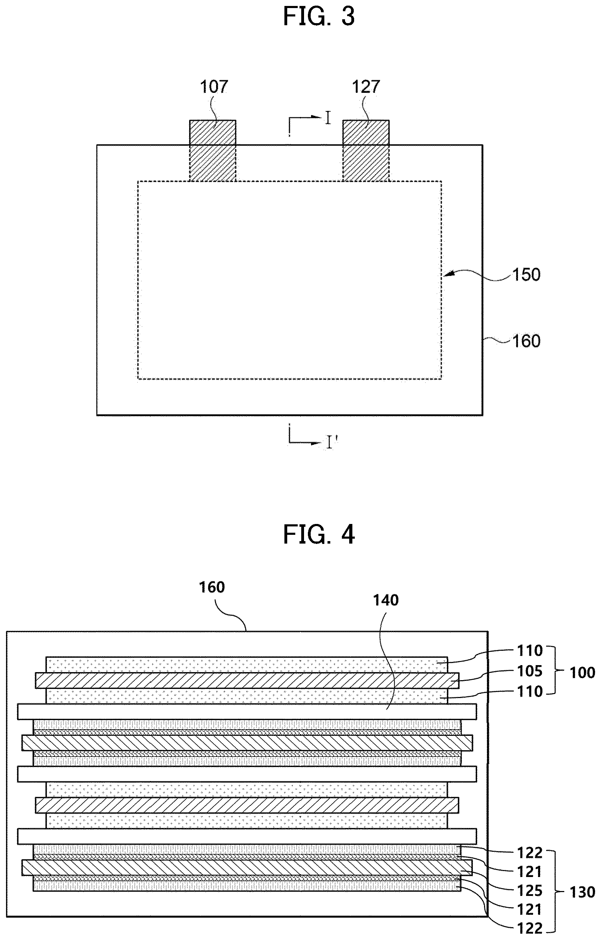

FIGS. 3 and 4 are a schematic plan view and a schematic cross-sectional view, respectively, illustrating a lithium secondary battery in accordance with example embodiments. For example, FIG. 4 is a cross-sectional view taken along a line I-I' of FIG. 3 in a thickness direction.

Referring to FIGS. 3 and 4, the lithium secondary battery may include an electrode assembly including a cathode 100, an anode 130, and a separator 140 interposed between the cathode and the anode. The electrode assembly may be accommodated together with an electrolyte solution in a case 160 to be impregnated therein.

The cathode 100 may include a cathode active material layer 110 formed by coating a mixture including a cathode active material on the cathode current collector 105.

The cathode current collector 105 may include stainless steel, nickel, aluminum, titanium or an alloy thereof. The cathode current collector 105 may include aluminum or stainless steel surface-treated carbon, nickel, titanium, silver, etc.

The cathode active material may include a compound capable of reversibly intercalating and de-intercalating lithium ions.

In example embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Chemical Formula 1.

$$[\text{Chemical Formula 1}] \qquad Li_xNi_{1-y}M_yO_{2+z}$$

In Formula 1, $0.9 \leq x \leq 1.2$, $0 \leq y \leq 0.7$, $-0.1 \leq z \leq 0.1$. M may represent at least one element selected from Na, Mg, Ca, Y, Ti, Hf, V, Nb, Ta, Cr, Mo, W, Mn, Co, Fe, Cu, Ag, Zn, B, Al, Ga, Sn and Zr.

In some embodiments, a molar ratio or a concentration (1-y) of Ni in Chemical Formula 1 may be 0.8 or more, and preferably, may be greater than 0.8.

A mixture may be prepared by mixing and stirring the cathode active material with a binder, a conductive material and/or a dispersive agent in a solvent. The mixture may be coated on the cathode current collector 105, and then dried and pressed to prepare the cathode 100.

A non-aqueous solvent may be used as the solvent. As non-limiting examples, N-methyl-2-pyrrolidone (NMP), dimethylformamide, dimethylacetamide, N, N-dimethylaminopropylamine, ethylene oxide, tetrahydrofuran, etc., may be used.

For example, the binder may include an organic binder such as a vinylidene fluoride-hexafluoropropylene copolymer (PVDF-co-HFP), polyvinylidene fluoride (PVDF), polyacrylonitrile, polymethyl methacrylate, or an aqueous binder such as styrene-butadiene rubber (SBR) that may be used with a thickener such as carboxymethyl cellulose (CMC).

Preferably, a PVDF-based binder may be used as the cathode binder. In this case, an amount of the binder for forming the cathode active material layer may be reduced, and an amount of the cathode active material may be relatively increased. Thus, capacity and power of the lithium secondary battery may be further improved.

The conductive material may include a material the same as or similar to that used for the anode active material layer.

The anode 130 may include a first anode active material layer 121 and a second anode active material layer 122 sequentially stacked on at least one surface of the anode current collector 125. As illustrated in FIG. 4, the first anode active material layer 121 and the second anode active material layer 122 may be sequentially stacked on each of both surfaces of the anode current collector 125. Details of the anode may be the same as those as described above.

The separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separator 140 may be also formed from a non-woven fabric including a glass fiber with a high melting point, a polyethylene terephthalate fiber, or the like.

In some embodiments, an area and/or a volume of the anode 130 (e.g., a contact area with the separator 140) may be greater than that of the cathode 100. Thus, lithium ions generated from the cathode 100 may be easily transferred to the anode 130 without loss by, e.g., precipitation or sedimentation. Thus, the improvements of capacity and power according to the above-mentioned anode active material may be more easily implemented.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking or folding of the separator 140.

The electrode assembly 150 may be accommodated together with the electrolyte in the case 160 to define a lithium secondary battery. In example embodiments, a non-aqueous electrolyte solution may be used as the electrolyte.

For example, the non-aqueous electrolyte solution may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N$; $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 3, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a prismatic shape, a pouch shape or a coin shape.

Hereinafter, experimental examples embodiments are proposed to more concretely describe embodiments of the present disclosure. However, the following examples are only given for illustrating the present disclosure and those skilled in the related art will obviously understand that various alterations and modifications are possible within the scope and spirit of the present disclosure. Such alterations and modifications are duly included in the appended claims.

Preparation Example 1

Preparation of carbon-based particle

i) Synthesis of resol oligomer: Phenol and formaldehyde were mixed in a molar ratio of 1:2, and 1.5 wt% of triethylamine was added, followed by a reaction at 85 °C, 4 h and 160 rpm (stirring).
ii) Suspension stabilization of resol oligomer: 1 g of poly(vinyl alcohol)) (PVA) was dispersed in a water-dispersible medium, and added to the resol oligomer.
iii) Curing of resol Oligomer: 3g of hexamethylene tetramine (HMTA) as a curing agent was added to the resol oligomer and reacted at 98 °C for 12 h at 400 rpm (stirring).
iv) Obtaining carbon material: The cured resol oligomer was classified using a sieve, and then washed with $H_2O$.
v) Unreacted monomers and oligomers were removed from the washed resol oligomer using ethanol, and then dried.
vi) Carbonization and activation: The dried resol oligomer was calcined at 900 °C for 1 hour under a nitrogen atmosphere while a $CO_2$ gas was introduced at a flow rate of 1 L/min and carbonized at 900 °C.

Formation of silicone-containing coating layer

A silane gas was injected into a CVD coater at a flow rate of 50 to 100 mL/min, the temperature was raised at a ramping rate of 5 to 20°C/min to 200 °C and maintained at 200 °C for about 2 hours to form a silicon-containing coating layer at an inside of pores and on surfaces of the carbon-based particle.

Formation of surface oxide layer

A high-concentration oxygen gas was injected into the CVD coater at a flow rate of 50 to 100 mL/min, the temperature was raised at a ramping rate of 5 to 20°C/min to 100 °C and the deposited silicon surface was oxidized at 100°C for about 1 hour to form a surface oxide layer.
Accordingly, composite particles including the carbon-based particle, the silicon-containing coating layer and the surface oxide layer were prepared.

Preparation Example 2

Composite particles were prepared by the same method as that in Preparation Example 1, except that oxidation was performed at a temperature of 200°C for about 1 hour when forming the surface oxide layer of the composite particle.

Preparation Example 3

Composite particles were prepared by the same method as that in Preparation Example 1, except that the silane gas was injected into the CVD coater at a flow rate of 100 to 500 mL/min, the temperature was raised at a ramping rate of 5 to 20°C/min to 600°C or more and maintained at 600°C or more for about 30 to 120 minutes.

Preparation Example 4

Composite particles were prepared by the same method as that in Preparation Example 1, except that the surface oxide layer of the composite particle was not formed.

Experimental Example 1: Analysis of composite particle properties

(1) Measurement of silicon oxidation ratio

1) Measurement of binding energy of silicon by XPS

Each composite particles prepared according to Preparation Examples were attached to a carbon tape to form a sample, and an XPS analysis was performed under the following conditions to measure a binding energy of silicon.

[XPS Analysis Condition]

    i) X-ray type: Al k alpha, 1486.68 eV, 900 μm Beam size
    ii) Analyzer: CAE (constant analyzer energy) Mode
    iii) Number of scans: 50
    iv) Pass energy: 20 eV
    v) v) Dwell Time: 100ms
    vi) Ion gun: Ar ion
    vii) Ion energy: 4000 eV
    viii) Etch Cycle: 300s
    ix) Total Levels: 20

Specifically, the binding energy of silicon included in the surface oxide layer was measured using the XPS on the surface oxide layer of the anode active material prepared according to Preparation Examples.
Additionally, after etching the surface oxide layer using an atomic ion gun, a binding energy of silicon in a section without a change of a silicon content according to a depth (e.g., a distance from the particle surface of 100 nm or more) was measured to obtain a binding energy of silicon contained in the silicon-containing coating layer.

2) Measurement of silicon oxidation ratio

A value obtained by subtracting 99.6 eV from each measured binding energy of silicon included in the surface oxide layer and the silicon-containing coating layer was substituted with a y value of a silicon oxidation calibration curve to obtain oxidation numbers (x values of the silicon oxidation calibration curve) of silicon included in the surface oxide layer and the silicon-containing coating layer.

The obtained oxidation number of silicon was substituted into Equation 1 to calculate a silicon oxidation number ratio.

### (2) Measurement of oxygen content ratio

An XPS analysis was performed on the composite particles prepared according to each of Preparation Examples under the same conditions as those in Experimental Example 1. (1)-1 to measure a percentage (at%) of oxygen atoms included in the surface oxide layer relative to the total number of atoms included in the silicon-containing coating layer and the surface oxide layer, and a percentage (at%) of oxygen atoms included in the silicon-containing coating layer relative to the total number of atoms included in the silicon-containing coating layer.

### (3) Raman spectroscopic analysis of silicon

A Raman spectrum of silicon contained in the silicon-containing coating layer was measured using a 532 nm laser Raman spectroscopy for the anode active materials prepared according to Preparation Examples 1 and 3 as described above. In the obtained Raman spectrum, a silicon peak intensity in a region having a wavenumber of 515 $cm^{-1}$ and a silicon peak intensity in a region having a wavenumber of 480 $cm^{-1}$ were measured. The measured peak intensities were applied to Equation 4 to calculate a peak intensity ratio (I(515)/I(480)) of the silicon Raman spectrum.

### (4) Measurement of amorphous silicon and crystallite size

For the anode active materials prepared according to Preparation Examples 1 and 3, the crystallite size was calculated using an XRD analysis and Equation 3 as described above.

When a silicon particle size was excessively small and was not capable of being measured through the XRD analysis, the anode active material was determined as being amorphous.

Specific XRD analysis equipment/conditions are as described in Table 1 below.

[Table 1]

| XRD(X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

The properties of the composite particles measured as described above are shown in Tables 2 and 3 below.

[Table 2]

| | oxidation temperature (°C) | silicon oxidation number | | | oxygen content | | |
|---|---|---|---|---|---|---|---|
| | | surface oxide layer | silicon-containing coating layer | $O_S/O_B$ | surface oxide layer | silicon-containing coating layer (at%) | $C_B/C_S$ |
| Preparation Example 1 | 100 | 3.3 | 1.4 | 2.36 | 25.2 | 8.5 | 0.34 |

(continued)

| | oxidation temperature (°C) | silicon oxidation number | | | oxygen content | | |
|---|---|---|---|---|---|---|---|
| | | surface oxide layer | silicon-containing coating layer | $O_S/O_B$ | surface oxide layer | silicon-containing coating layer (at%) | $C_B/C_S$ |
| Preparation Example 2 | 200 | 3.4 | 1.5 | 2.27 | 30.1 | 8.8 | 0.29 |
| * Preparation Example 3 | 100 | 3.2 | 1.4 | 2.29 | 25.5 | 8.6 | 0.34 |
| Preparation Example 4 | - | 2.2 | 1.4 | 1.57 | 9.6 | 8.5 | 0.89 |

[00255] * The formation conditions of the silicon-containing coating layer Preparation Example 3 were different from those of Preparation Example 1.

[Table 3]

| | silicon-containing coating layer | |
|---|---|---|
| | crystallite size (nm) | peak intensity ratio (I(515)/I(480)) |
| Preparation Example 1 | amorphous | 0.572 |
| Preparation Example 3 | 7.1 | 1.181 |

Example 1

(1) Fabrication of anode

A first anode slurry was obtained by mixing 95.5 wt% of artificial graphite, 1 wt% of CNT as a conductive material, 2 wt% of styrene-butadiene rubber (SBR) as a binder, and 1.5 wt% of carboxymethyl cellulose (CMC) as a thickener.

The composite particles of Preparation Example 1 were left for one day, and then a second anode slurry was obtained by mixing 95.5 wt% of a mixture including 20 wt% of the composite particles and 75.5 wt% of artificial graphite, 1 wt% of CNT as a conductive material, 2 wt% of styrene-butadiene rubber (SBR) as a binder, and 1.5 wt% of carboxymethyl cellulose (CMC) as a thickener.

The first anode slurry was coated on a copper substrate, dried, and pressed to form a first anode active material layer having a thickness of 35 $\mu$m, and then the second anode slurry was coated, dried and pressed on the first anode active material layer to form a second anode active material layer having a thickness of 35 $\mu$m to prepare an anode.

(2) Fabrication of lithium half cell (Li-half cell)

A lithium half-cell including the anode prepared as described above and using a lithium metal as a counter electrode (cathode) was manufactured.

Specifically, a separator (polyethylene, thickness of 20 $\mu$m) was interposed between the prepared anode and the lithium metal (thickness of 1 mm) to construct a lithium coin half-cell.

The assembly of the lithium metal/separator/anode was put into a coin cell plate, and a cap was covered and clamped after injecting an electrolyte. In a preparation of the electrolyte, a 1M $LiPF_6$ solution was prepared using a mixed solvent of EC/EMC (3:7; volume ratio), and then 2.0 vol% FEC to a total volume of the electrolyte was added. After clamping, impregnation was performed for 3 to 24 hours, and then charging and discharging was performed at 0.1C for 3 cycles (charging condition CC-CV 0.1C 0.01V CUT-OFF, discharging condition CC 0.1C 1.5V CUT-OFF).

Examples 2 and 3

An anode and a lithium half battery were manufactured by the same method as that in Example 1, except that the composite particles prepared in Preparation Example 2 and Preparation Example 3 were used as composite particles, respectively.

Example 4

An anode and a lithium half battery were manufactured by the same method as that in Example 1, except that the second anode slurry was prepared by mixing 95.5 wt% of a mixture including 15 wt% of the composite particles of Preparation Example 1 and 80.5 wt% of artificial graphite, 1 wt% of CNT as a conductive material, 2 wt% of styrene-butadiene rubber (SBR) as a binder, and 1.5 wt% of carboxymethyl cellulose (CMC) as a thickener.

Comparative Example 1

An anode slurry was obtained by mixing 95.5 wt% of a mixture including 11 wt% of the composite particles of Preparation Example 1 and 84.5 wt%, 1 wt% of CNT as a conductive material, 2 wt% of styrene-butadiene rubber (SBR) as a binder, and 1.5 wt% of carboxymethyl cellulose (CMC) as a thickener.
A lithium half battery was manufactured by the same method as that in Example 1, except that the anode slurry was coated, dried and pressed on a copper substrate to form a first anode active material layer having a thickness of 35 $\mu$m, and then the same anode slurry was coated, dried and pressed on the first anode active material layer to form a second anode active material layer having a thickness of 35 $\mu$m to form an anode.

Comparative Example 2

An anode and a lithium half battery were manufactured by the same method as that in Example 1, except that the composite particles prepared in Preparation Example 4 were used as composite particles.

Comparative Example 3

An anode and a lithium half battery were manufactured by the same method as that in Example 1, except that silicon oxide particles were used instead of the composite particles.
In Examples and Comparative Examples, inclusion of the composite particles and a thickness in the first anode active material layer, and a thickness, a content of the composite particles and a type of the composite particles in the second anode active material layer are shown in Table 4 below.

[Table 4]

|  | first anode active material layer | | second anode active material layer | | |
| --- | --- | --- | --- | --- | --- |
|  | inclusion of composite particles | thickness ($\mu$m) | composite particles | content (wt%) | thickness ($\mu$m) |
| Example 1 | not included | 35 | Preparation Example 1 | 20 | 35 |
| Example 2 | not included | 35 | Preparation Example 2 | 20 | 35 |
| Example 3 | not included | 35 | Preparation Example 3 | 20 | 35 |
| Example 4 | not included | 35 | Preparation Example 1 | 15 | 35 |
| Comparative Example 1 | included (Preparation Example 1) | 35 | Preparation Example 1 | 11 | 35 |
| Comparative Example 2 | not included | 35 | Preparation Example 4 | 20 | 35 |
| * Comparative Example 3 | not included | 35 | - | - | 35 |
| * In Comparative Example 3, the silicon oxide particles were used instead of the composite particles. | | | | | |

Experimental Example 2: Analysis of XRM anode pore properties

Internal pore shapes of the anodes prepared in Examples and Comparative Examples were analyzed using a 3D X-ray microscope (XRM).

Specifically, the anodes prepared in Examples and Comparative Examples were mounted on a jig of a 3D X-ray microscope, and a plurality of tomography images obtained by photographing a tomography image were 3-dimensinally recombined to model open 3-dimensional shape data of the first and second anode active material layers.

From the open pore three-dimensional shape data, a thickness direction of the internal pores, i.e., a degree of orientation in a Z-axis direction, was derived using the Porodict program.

Further, the shortest path length of the open pore from a surface of the second anode active material layer not in contact with the first anode active material layer to a surface of the anode current collector was measured from the same open pore three-dimensional shape data, and an average value of the shortest path lengths for top 100 open pores in an order of large diameter sizes was calculated to derive a percolation path length.

The obtained Z-axis pore orientation values and the percolation path lengths are shown in Table 5 below.

[Table 5]

|  | Z-axis pore orientation | percolation path length ($\mu$m) |
| --- | --- | --- |
| Example 1 | 0.43 | 73.2 |
| Example 2 | 0.42 | 73.5 |
| Example 3 | 0.41 | 75.0 |
| Example 4 | 0.44 | 72.8 |
| Comparative Example 1 | 0.39 | 75.6 |
| Comparative Example 2 | 0.40 | 75.2 |
| Comparative Example 3 | 0.41 | 75.2 |

Experimental Example 3: Evaluation on battery properties

(1) Measurement of initial discharge resistance (DC-IR)

The lithium half-cells of Examples and Comparative Examples were charged under conditions of 0.5C CC/CV at 25°C (4.2V 0.05C CUT-OFF), and then discharged under conditions 0.5C CC to SOC 50. The battery was discharged at a C-rate of 1C and for 10 seconds at a point of SOC 50 and supplementary charged to measure an initial DC-IR.

(2) Evaluation on room temperature life-span property: capacity retention

The lithium half-cells according to Examples and Comparative Examples were charged by a constant current at room temperature (25°C) until a voltage reached 0.01V (vs. Li) with a current of 0.1C, and then charged with a constant voltage and a cut-off at a current of 0.01C while maintaining 0.01V up to SOC 98. The batteries were discharged to SOC 4 with a constant current of 0.1C rate until the voltage reached 1.5V (vs. Li) to measure a discharge capacity.

The above charging and discharging were set as one cycle, and the one cycle of charging and discharging was further performed by the same method. Thereafter, the applied current was changed to 0.5C to proceed with 380 cycles with an interphase of 10 minutes between the cycles.

A discharge capacity after the 380 cycles was measured, and a capacity retention ratio was calculated as a percentage relative to the discharge capacity at the 1st cycle.

(3) Evaluation on rapid charge property

For the lithium half-cells of Examples and Comparative Examples, a 4.2V constant voltage charging was performed at 25°C to reach SOC82 within 35 minutes, and a constant current discharge (SOCIO, CC cut-off) was performed at 0.3C until a lower limit voltage reached 2.5V.

300 cycles of the charge and discharge were repeatedly performed 300 to calculate a capacity retention as a percentage of a discharge capacity after the 300 cycles relative to a discharge capacity after the 1st cycle.

The evaluation results are in Table 6 below.

[Table 6]

| | initial DC-IR (mΩ) | room temperature capacity retention (%) | rapid charge capacity retention (%) |
|---|---|---|---|
| Example 1 | 0.959 | 96.5 | 97.2 |
| Example 2 | 0.965 | 96.2 | 94.0 |
| Example 3 | 1.000 | 95.0 | 88.0 |
| Example 4 | 0.930 | 96.8 | 98.0 |
| Comparative Example 1 | 1.026 | 96.5 | 84.7 |
| Comparative Example 2 | 1.020 | 96.8 | 86.2 |
| Comparative Example 3 | 1.015 | 97.0 | 87.0 |

Referring to Table 5 above, the anodes of Examples which included the first anode active material layer including the graphite-based active material and a second anode active material layer including the graphite-based active material and the composite particles had the Z-axis pore orientation value of 0.4 or more and a percolation path length of 75 μm or less, so that a transfer moving distance of lithium ions became reduced and the ratio of pores oriented in the thickness direction of the electrode became high. Accordingly, the ion transfer were promoted so that the high-power lithium battery was implemented.

Referring to Table 6, the lithium half-cells of Examples provided low initial resistance, high capacity retention at room temperature and high battery capacity during the rapid charging.

Referring to both Table 2 and Table 6, the capacity efficiency and life-span properties of Examples where the composite particles having the silicon oxidation number of 1.7 or more defined by Equation 1 of the silicon-containing coating layer were used were improved compared to those from Comparative Example 2.

In Example 3, the composite particles having the crystallite size of more than 7 nm of silicon included in the silicon-containing coating layer were used. Accordingly, initial resistance properties were relatively degraded compared to those from other Examples.

The first anode active material layer in the anode of Comparative Example 1 included the composite particles, and the Z-axis pore orientation value was decreased and the percolation path length was increased. Accordingly, ion transfer properties were degraded. Specifically, the initial resistance was increased and the capacity of the battery was rapidly decreased during the rapid charging and discharging of the lithium half-cell of Comparative Example 1.

In Comparative Example 2 where the composite particles did not include the oxide layer, the initial resistance properties and the capacity retention during the rapid charging were degraded than those from the batteries of Examples.

In Comparative Example 2 where the second anode active material layer did not include the composite particles and included the silicon oxide particles, the capacity was significantly reduced during the rapid charging of the battery and the capacity retention was reduced.

The above descriptions are merely examples of applying the concepts of the present disclosure, and other elements may be further included without departing from the scope of the present disclosure.

**Claims**

1. An anode for a lithium secondary battery, comprising:

an anode current collector (125);
a second anode active material layer (122) disposed on the anode current collector (125), the second anode active material layer (122) comprising a second anode active material that includes a graphite-based active material and composite particles; and
a first anode active material layer (121) disposed between the anode current collector and the second anode active material layer, the first anode active material layer (121) comprising a first anode active material that includes a graphite-based active material and does not include the composite particles,
wherein each of the composite particles comprises:

a carbon-based particle including pores;

a silicon-containing coating layer disposed on an inside of the pores of the carbon-based particle or on a surface of the carbon-based particle; and

a surface oxide layer disposed on the silicon-containing coating layerand including a silicon oxide.

2. The anode for a lithium secondary battery according to claim 1, wherein a content of the composite particles is in a range from 3 wt% to 50 wt% based on a weight of the second anode active material layer (122).

3. The anode for a lithium secondary battery according to claims 1 or 2, wherein the first anode active material consists of the graphite-based active material.

4. The anode for a lithium secondary battery according to one of claims 1 to 3, wherein a Z-axis pore orientation value measured using a 3D X-ray microscope (XRM) for the first anode active material layer (121) and the second anode active material layer (122) is 0.4 or more,

the Z-axis pore orientation value is measured using a Porodict program from open pore three-dimensional shape data, and

the open pore three-dimensional shape data are obtained by three-dimensionally recombining and modeling a plurality of tomographic images of the first anode active material layer (121) and the second anode active material layer (122) obtained by the 3D XRM.

5. The anode for a lithium secondary battery according to one of claims 1 to 4, wherein a percolation path length measured using a 3D X-ray microscope (XRM) for the first anode active material layer (121) and the second anode active material layer (122) is 75 $\mu$m or less,

the percolation path length is an average of shortest paths of top 100 pores in an order of largest pore diameters from open pore 3D shape data from a surface of the second anode active material layer (122) that is not in contact with the first anode active material layer (121) to a surface of the anode current collector (125), and

the open pore three-dimensional shape data are obtained by three-dimensionally recombining and modeling a plurality of tomographic images of the first anode active material layer (121) and the second anode active material layer (122) obtained by the 3D XRM.

6. The anode for a lithium secondary battery according to one of claims 1 to 5, wherein a silicon oxidation number ratio defined by Equation 1 of the composite particles is 1.7 or more:

[Equation 1]

$$\text{Silicon oxidation number ratio} = O_S/O_B$$

wherein, in Equation 1, $O_B$ is an oxidation number of silicon included in the silicon-containing coating layer calculated by substituting a value obtained by subtracting 99.6 eV from a binding energy of silicon included in the silicon-containing coating layer measured through an X-ray photoelectron spectroscopy (XPS) into a silicon oxidation number calibration curve, and $O_S$ is an oxidation number of silicon included in the surface oxide layer calculated by substituting a value obtained by subtracting 99.6 eV from a binding energy of silicon included in the surface oxide layer measured through the XPS into the silicon oxidation number calibration curve.

7. The anode for a lithium secondary battery according to claim 6, wherein the silicon oxidation number calibration curve is obtained by designating points corresponding to $Si^0$, $Si^{1+}$, $Si^{2+}$, $Si^{3+}$ and $Si^{4+}$ in a graph in which the oxidation number of silicon is set as x-axis and a value obtained by subtracting 99.6 eV from the binding energy of silicon measured through the XPS is set as a y-axis, and connecting adjacent points by the shortest distance.

8. The anode for a lithium secondary battery according to one of claims 1 to 7, wherein the silicon-containing coating layer is located in a region corresponding to a depth of 100 nm to 700 nm from a surface of the composite particle, and the surface oxide layer is located in a region corresponding to a depth of 10 nm or less from the surface of the composite particle.

9. The anode for a lithium secondary battery according to one of claims 1 to 8, wherein an oxygen content ratio defined by Equation 2 of the composite particles is 0.4 or less:

$$[\text{Equation 2}]$$

$$\text{Oxygen content ratio} = C_B/C_S$$

wherein, in Equation 2, $C_B$ is a percentage (at%) of oxygen atoms in the silicon-containing coating layer relative to a sum of the number of atoms in the silicon-containing coating layer and the number of atoms in the surface oxide layer measured by an X-ray photoelectron spectroscopy (XPS), and $C_S$ is a percentage (at%) of oxygen atoms in the surface oxide layer relative to the sum of the number of atoms in the silicon-containing coating layer and the number of atoms in the surface oxide layer measured by the XPS.

10. The anode for a lithium secondary battery according to one of claims 1 to 9, wherein the carbon-based particle has an amorphous structure.

11. The anode for a lithium secondary battery according to one of claims 1 to 10, wherein silicon included in the silicon-containing coating layer has an amorphous structure, or a crystallite size of silicon included in the silicon-containing coating layer measured by Equation 3 is 7 nm or less:

$$[\text{Equation 3}]$$

$$L = \frac{0.9\lambda}{\beta cos\theta}$$

wherein, in Equation 3, L is a crystallite size (nm), $\lambda$ is an X-ray wavelength (nm), $\beta$ is a full width at half maximum (rad) of a peak of a (111) plane of silicon included in the silicon-containing coating layer, and $\theta$ is a diffraction angle (rad).

12. A method of preparing an anode for a lithium secondary battery, comprising:

forming a first anode active material layer (121) that includes a first anode active material including a graphite-based active material on a surface of an anode current collector (125);
firing carbon-based particles containing pores and a silicon source together to form a silicon-containing coating layer on an inside or on a surface of the pores of the carbon-based particles;
heat-treating the carbon-based particles on which the silicon-containing coating layer is formed in an oxygen atmosphere to form composite particles including a surface oxide layer that contains a silicon oxide and is formed on the silicon-containing coating layer; and
forming a second anode active material layer (122) on the first anode active material layer (121), the second anode active material layer (122) comprising a second anode active material that includes a graphite-based active material and the composite particles.

13. The method of claim 12, wherein the first anode active material does not include the composite particles.

14. The method of claims 12 or 13, wherein the heat-treating for the formation of the surface oxide layer is performed at a temperature of 100°C to 300°C.

15. A lithium secondary battery, comprising:

the anode (130) for a lithium secondary battery according to one of claims 1 to 11; and
a cathode (100) facing the anode.

# FIG. 1

# FIG. 2

# FIG. 3

# FIG. 4

Europäisches
Patentamt

European
Patent Office

Office européen
des brevets

# EUROPEAN SEARCH REPORT

Application Number

EP 24 16 0386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 551 797 A (UNIVERSAL FIRST SECOND THIRD SHARE COMPANY) 27 May 2022 (2022-05-27) * claims 1,4 * | 1-15 | INV. H01M4/36 H01M4/04 H01M4/133 H01M4/134 H01M4/1393 H01M4/587 |
| A | US 2022/115703 A1 (MIYACHI YOSHIKAZU [JP] ET AL) 14 April 2022 (2022-04-14) * paragraphs [0057], [0058] * | 1-15 | |
| A | US 2022/052314 A1 (ISHIKAWA KAORI [JP] ET AL) 17 February 2022 (2022-02-17) * paragraphs [0024], [0025] * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 30 August 2024 | González Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0386

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | | Publication date | Patent family member(s) | | Publication date |
|---|---|---|---|---|---|
| CN 114551797 | A | 27-05-2022 | NONE | | |
| US 2022115703 | A1 | 14-04-2022 | CN | 113366666 A | 07-09-2021 |
| | | | EP | 3920276 A1 | 08-12-2021 |
| | | | JP | 7340780 B2 | 08-09-2023 |
| | | | JP | WO2020158153 A1 | 02-12-2021 |
| | | | US | 2022115703 A1 | 14-04-2022 |
| | | | WO | 2020158153 A1 | 06-08-2020 |
| US 2022052314 | A1 | 17-02-2022 | CN | 113272993 A | 17-08-2021 |
| | | | EP | 3905390 A1 | 03-11-2021 |
| | | | JP | 7394324 B2 | 08-12-2023 |
| | | | JP | WO2020137321 A1 | 11-11-2021 |
| | | | US | 2022052314 A1 | 17-02-2022 |
| | | | WO | 2020137321 A1 | 02-07-2020 |

EPO FORM P0459

For more details about this annex : see Official Journal of the European Patent Office, No. 12/82